# EUROPEAN PATENT APPLICATION

(11) **EP 4 779 849 A1**
(43) Date of publication of application: **22.07.2026**
(21) Application number: 24891148.9
(22) Date of filing: 17.10.2024
(51) Int. Cl.: H02K 11/27

(54) **VEHICLE DRIVE DEVICE**

(30) Priority: 15.11.2023 JP 2023194155
(71) Applicant: AISIN CORPORATION, Kariya-shi, Aichi 448-8650 (JP)
(72) Inventor: MUTSUURA, Keita, Kariya-shi, Aichi 448-8650 (JP); CHISO, Yasuyoshi, Kariya-shi, Aichi 448-8650 (JP); MORIMOTO, Yuta, Kariya-shi, Aichi 448-8650 (JP)
(74) Representative: Kramer Barske Schmidtchen Patentanwälte PartG mbB
(86) International application number: PCT/JP2024/037002
(87) International publication number: WO 2025/105106

(57) **Abstract**

A vehicle drive device is disclosed that includes: a stator; a winding field rotor around which a coil is wound; a power feeding device provided between a power supply and the winding field rotor and configured to supply power to the winding field rotor in a contactless manner; and a contactless current sensor. The power feeding device includes a first board on a fixed side which has a power feeding circuit unit electrically connected to the power supply, and a second board which has a power receiving circuit unit electrically connected to the coil, is disposed so as to face the first board, and is configured to rotate integrally with the winding field rotor. The contactless current sensor is disposed on the first board.

## Description

### Technical Field

This disclosure relates to a vehicle drive device.

### Background Art

In a motor including a rotor around which a driving coil for generating a magnetic field for rotation is wound, a technique of supplying power to the driving coil in a contactless manner is known.

### Citation List

### Patent Literature

PTL 1: JP2011-10421A

### Summary of Invention

### Technical Problem

In a contactless power feeding method as described above, when a current sensor that detects a current value (magnitude of a current flowing through the driving coil) on a secondary side is disposed on the secondary side, it is necessary to receive sensor information in the contactless manner. At this time, although it may be possible to implement such contactless communication by securing a space in a radial direction, there is a problem that a size of an entire device in the radial direction tends to increase.

Therefore, in one aspect, an object of the present disclosure is to dispose a current sensor that detects a current value on a secondary side without increasing a size of an entire device in a radial direction while using a contactless power feeding method.

### Solution to Problem

According to an aspect of the present disclosure, there is provided a vehicle drive device including:
a stator;
a winding field rotor around which a coil is wound;
a power feeding device provided between a power supply and the winding field rotor and configured to supply power to the winding field rotor in a contactless manner; and
a contactless current sensor, in which
the power feeding device includes
   a first board on a fixed side which has a power feeding circuit unit electrically connected to the power supply, and
   a second board which has a power receiving circuit unit electrically connected to the coil, is disposed so as to face the first board, and is configured to rotate integrally with the winding field rotor, and
the contactless current sensor is disposed on the first board.

### Advantageous Effects of Invention

In one aspect, according to the present disclosure, it is possible to dispose a current sensor that detects a secondary-side current without increasing a size of the entire device in a radial direction while using a contactless power feeding method.

### Brief Description of Drawings

[FIG. 1] FIG. 1 is a configuration diagram illustrating a vehicle driving system including a driving device for a rotary electric machine according to the present embodiment.
[FIG. 2] FIG. 2 is a schematic cross-sectional view illustrating a part of a cross section of the rotary electric machine.
[FIG. 3] FIG. 3 is a plan view schematically illustrating a configuration of a first layer of a power receiving circuit board.
[FIG. 4] FIG. 4 is a plan view schematically illustrating a configuration of a second layer of the power receiving circuit board.
[FIG. 5] FIG. 5 is a plan view schematically illustrating a configuration of a power feeding circuit board.
[FIG. 6] FIG. 6 is a schematic diagram illustrating a relationship between the power feeding circuit board and the power receiving circuit board in a schematic cross-sectional view passing through a central axis.
[FIG. 6A] FIG. 6A is a diagram illustrating a detection principle of a contactless current sensor and is a cross-sectional view of a part in FIG. 6.
[FIG. 7] FIG. 7 is a diagram illustrating an arrangement of components for forming a power feeding device in an axial direction in a schematic cross-sectional view passing through the central axis.
[FIG. 8] FIG. 8 is a schematic cross-sectional taken along a plane perpendicular to the axial direction at a position in the axial direction along a line VIII-VIII in FIG. 7.
[FIG. 9] FIG. 9 is an enlarged view illustrating a portion Q9 in FIG. 8.

### Description of Embodiments

Hereinafter, each embodiment will be described in detail with reference to the accompanying drawings. Note that dimensional ratios in the drawings are merely examples and are not limited thereto. Further, shapes and the like in the drawings may be partially exaggerated for the convenience of description. In addition, in the drawings, for the sake of clarity, a plurality of parts having the same attribute may be only partially denoted by reference numerals.

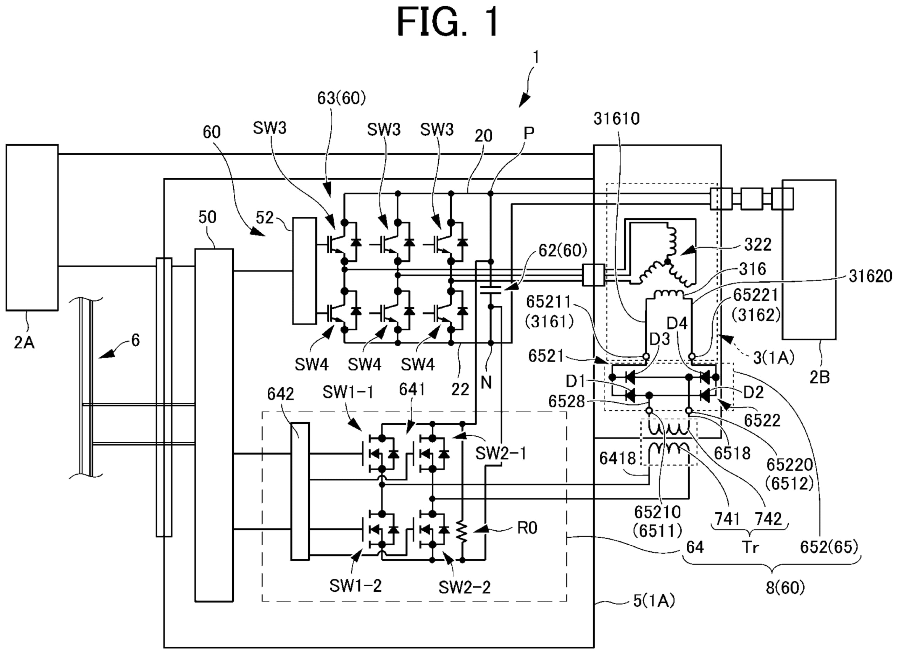

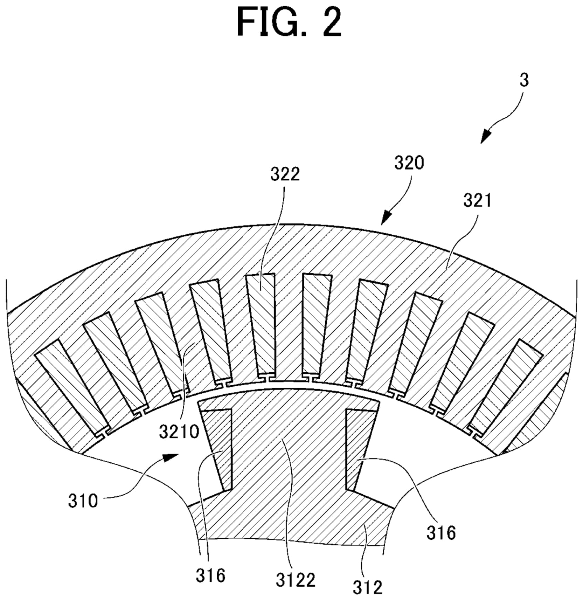

FIG. 1 is a configuration diagram illustrating a vehicle driving system 1 including a driving device 5 for a rotary electric machine according to the present embodiment. FIG. 2 is a schematic cross-sectional view illustrating a part of a cross section of a rotary electric machine 3.

The vehicle driving system 1 has a two-power-supply configuration including a low-voltage battery 2A and a high-voltage battery 2B, and includes a vehicle drive device 1A. The vehicle drive device 1A includes the rotary electric machine 3 and the driving device 5.

The low-voltage battery 2A is, for example, a lead battery, and has a rated voltage of, for example, 12 V.

The high-voltage battery 2B is, for example, a lithium-ion battery, and has a rated voltage significantly higher than that of the low-voltage battery 2A, for example, a rated voltage of 40 V or more. In the present embodiment, as an example, the rated voltage of the high-voltage battery 2B is 300 V or more. Note that the high-voltage battery 2B may be in a form of a fuel cell or the like.

The rotary electric machine 3 is of a winding field type, and includes a rotor 310 in which a rotor coil 316 is wound around a rotor core 312. Note that as illustrated in FIG. 2, the rotor core 312 includes a tooth portion 3122 protruding radially outward, and a conductor wire forming the rotor coil 316 is wound around the tooth portion 3122. A stator 320 is provided radially outer side of the rotor 310. As illustrated in FIG. 2, a stator coil 322 is wound around a tooth portion 3210 of a stator core 321.

The driving device 5 includes a microcomputer 50 (hereinafter, referred to as "microcomputer 50") and an electric circuit unit 60.

The microcomputer 50 may be implemented as, for example, an electronic control unit (ECU). The microcomputer 50 is connected to various electronic components (other ECUs and sensors) in a vehicle via a network 6 such as a controller area network (CAN).

The microcomputer 50 receives various commands such as a control command from a higher-level ECU (not illustrated) via the network 6. The microcomputer 50 controls the rotary electric machine 3 via the electric circuit unit 60 based on the control command. The microcomputer 50 operates based on power from the low-voltage battery 2A.

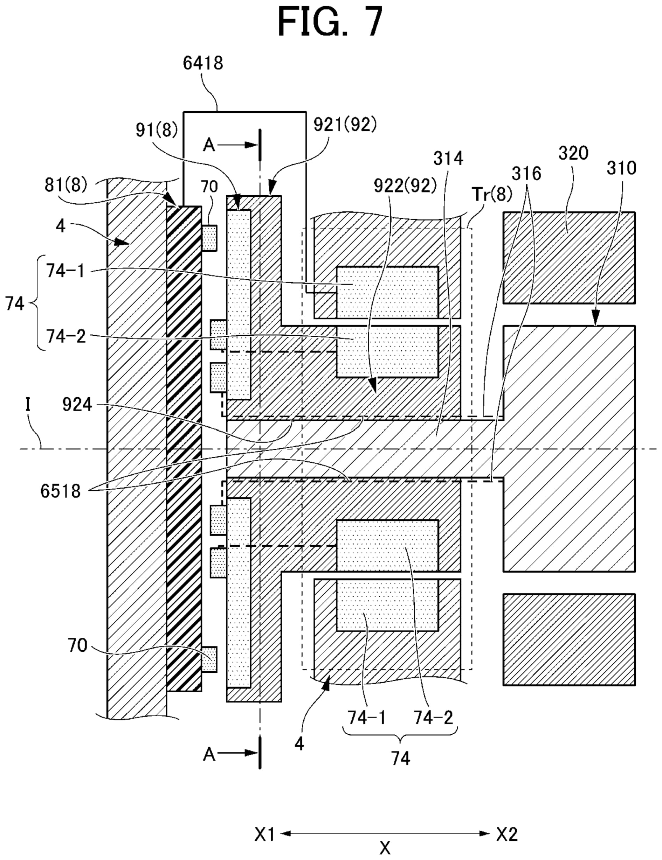

The electric circuit unit 60 includes a smoothing capacitor 62, a power conversion circuit unit 63, a power feeding circuit unit 64, and a power receiving circuit unit 65. The power feeding circuit unit 64 and the power receiving circuit unit 65, together with a transformer Tr, form a power feeding device 8 that supplies power to the rotor coil 316 in a contactless manner. The transformer Tr includes a core 74 (see FIG. 7), and a primary coil 741 and a secondary coil 742 wound around the core 74.

The smoothing capacitor 62 is provided between a high-potential-side line 20 and a low-potential-side line 22 of the high-voltage battery 2B. A resistor R0 for passive discharge may be connected to both ends of the smoothing capacitor 62.

The power conversion circuit unit 63 is in the form of an inverter, and forms, for example, a three-phase bridge circuit. The power conversion circuit unit 63 supplies three-phase AC power to the stator 320 of the rotary electric machine 3 under the control of the microcomputer 50 to be described later. The power conversion circuit unit 63 is connected between the high-potential-side line 20 and the low-potential-side line 22 so as to be parallel with the smoothing capacitor 62. The power conversion circuit unit 63 includes switching elements SW3 of high-potential-side arms and switching elements SW4 of low-potential-side arms. Note that the power conversion circuit unit 63 is controlled by the microcomputer 50 via a driving circuit 52.

The power feeding circuit unit 64 includes a bridge circuit unit 641 and a driving circuit unit 642.

The bridge circuit unit 641 is connected between the high-potential-side line 20 and the low-potential-side line 22 so as to be parallel to the smoothing capacitor 62 and the resistor R0 for passive discharge. The bridge circuit unit 641 is in the form of a full-bridge circuit, and includes switching elements SW1-1 and SW1-2 and switching elements SW2-1 and SW2-2.

The switching elements SW1-1 and SW1-2 are connected in series between the high-potential-side line 20 and the low-potential-side line 22. One end of the rotor coil 316 is connected between the switching elements SW1-1 and SW1-2. Further, the switching elements SW2-1 and SW2-2 are connected in series between the high-potential-side line 20 and the low-potential-side line 22 so as to be parallel with the switching elements SW1-1 and SW1-2. The other end of the rotor coil 316 is connected between the switching elements SW2-1 and SW2-2. Hereinafter, among the switching elements SW1-1, SW1-2, SW2-1, and SW2-2, a configuration related to the switching elements SW1-1 and SW2-1 may be denoted by "high-potential-side" for distinction, and a configuration related to the switching elements SW1-2 and SW2-2 may be denoted by "low-potential-side".

The switching elements SW1-1, SW1-2, SW2-1, and SW2-2 are switched between on and off states via the driving circuit unit 642. The switching elements SW1-1, SW1-2, SW2-1, and SW2-2 change an energization state of the rotor coil 316 under the control of the driving circuit unit 642. The switching elements SW1-1, SW1-2, SW2-1, and SW2-2 are, for example, insulated gate bipolar transistors (IGBTs), but may be other forms such as metal oxide semiconductor field-effect transistors (MOSFETs).

The driving circuit unit 642 supplies power to the rotor coil 316 via the power receiving circuit unit 65 by driving gates of the switching elements SW1-1, SW1-2, SW2-1, and SW2-2 based on a control signal from the microcomputer 50.

The power receiving circuit unit 65 is a rectifier circuit electrically connected to the secondary coil 742 of the transformer Tr. As illustrated in FIG. 1, the power receiving circuit unit 65 may be a diode bridge circuit. The power receiving circuit unit 65 is electrically connected between the secondary coil 742 and the rotor coil 316. The power receiving circuit unit 65 rectifies a secondary current (driving current) of the transformer Tr and supplies the rectified current to the rotor coil 316.

Next, various structures related to the power feeding device 8 will be described.

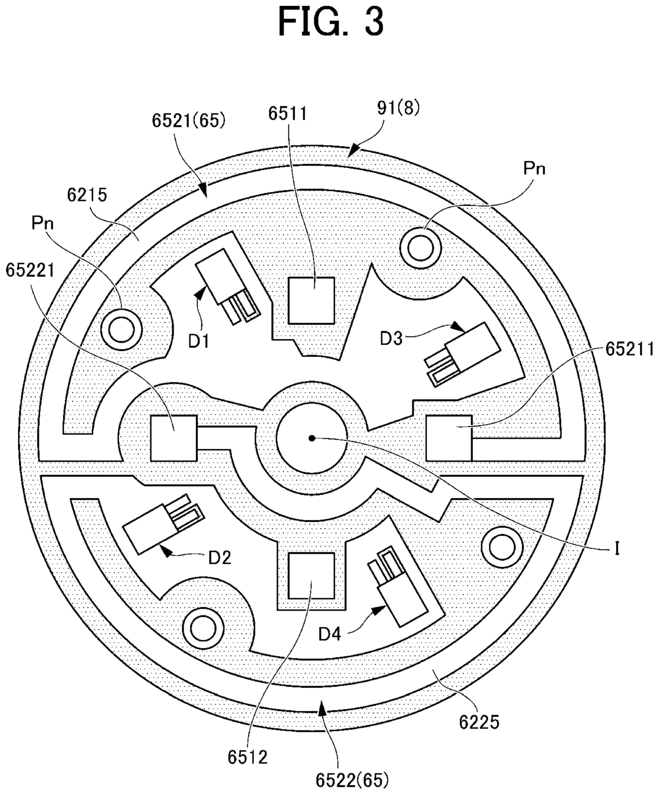

In the following description, an axial direction refers to a direction in which a central axis I (see FIG. 3 and the like) of the rotor 310 extends, and a radial direction refers to a radial direction about the central axis I. Therefore, the radially outer side refers to a side farther from the central axis I than a position, and a radially inner side refers to a side closer to the central axis I than the position. Further, an axially outer side refers to a side farther from a center of the rotor 310 in the axial direction than a position, and an axially inner side refers to a side closer to the center of the rotor 310 in the axial direction than the position. In addition, a circumferential direction corresponds to a rotation direction around the central axis I.

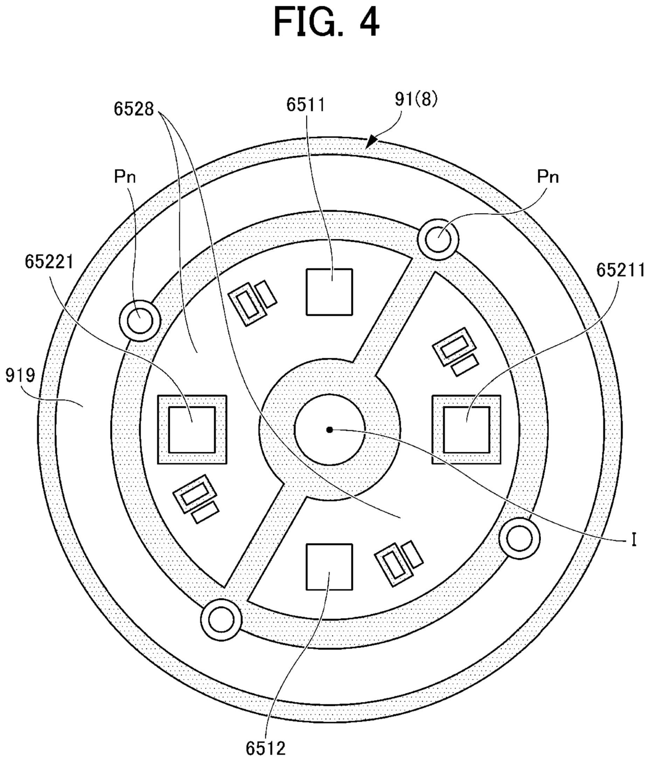

FIG. 3 is a plan view schematically illustrating a configuration of a first layer (hereinafter also referred to as "surface A") of a power receiving circuit board 91, and FIG. 4 is a plan view schematically illustrating a configuration of a second layer (hereinafter also referred to as "surface B") of the power receiving circuit board 91. In FIGS. 3 and 4, an insulating region (a region where no component or circuit is mounted) on each surface of the power receiving circuit board 91 is hatched for ease of viewing. Further, in FIGS. 3 and 4, for convenience of description, positioning pins Pn are also illustrated as elements other than the power receiving circuit board 91 and the mounted components (including circuits).

The power receiving circuit board 91 has an annular shape around the central axis I when viewed in the axial direction. That is, the power receiving circuit board 91 has an annular shape having a center hole centered on the central axis I. In this case, a rotary shaft 314 (see FIG. 7) of the rotor 310 may be inserted into the center hole of the power receiving circuit board 91.

The power receiving circuit unit 65 described above is mounted on the surface A of the power receiving circuit board 91. In the present embodiment, the power receiving circuit unit 65 includes a positive electrode side circuit 6521 and a negative electrode side circuit 6522.

One end of the positive electrode side circuit 6521 is electrically connected to a high-potential side (see P in FIG. 1) of a power supply via the transformer Tr or the like, and the other end is electrically connected to the rotor coil 316. More specifically, the one end of the positive electrode side circuit 6521 is connected to a terminal 6511 (FIG. 1) of the secondary coil 742 via a terminal 65210 (FIG. 1). In addition, the other end of the positive electrode side circuit 6521 is connected to a terminal 3161 (FIG. 1) of the rotor coil 316 via a positive electrode side terminal 65211 (FIGS. 1 and 3).

As illustrated in FIG. 3, the positive electrode side circuit 6521 has a wiring pattern 6215 extending in the circumferential direction (hereinafter, also referred to as a "circumferential wiring pattern 6215 of the positive electrode"). The circumferential wiring pattern 6215 of the positive electrode extends in the circumferential direction over an angular range of about 180 degrees of the entire circumference of the power receiving circuit board 91. In this case, the positive electrode side circuit 6521 includes diodes D1 and D3, which are rectifying elements, on the radially inner side of the circumferential wiring pattern 6215 of the positive electrode.

The circumferential wiring pattern 6215 of the positive electrode preferably extends in the circumferential direction over the angular range of about 180 degrees with a constant radial width.

One end of the negative electrode side circuit 6522 is electrically connected to a low-potential side (see N in FIG. 1) of the power supply via the transformer Tr or the like, and the other end is electrically connected to the rotor coil 316. More specifically, the one end of the negative electrode side circuit 6522 is connected to a terminal 6512 (FIG. 1) of the secondary coil 742 via a terminal 65220 (FIG. 1). In addition, the other end of the negative electrode side circuit 6522 is connected to a terminal 3162 (FIG. 1) of the rotor coil 316 via a negative electrode side terminal 65221 (FIGS. 1 and 3).

As illustrated in FIG. 3, the negative electrode side circuit 6522 includes a wiring pattern 6225 extending in the circumferential direction (hereinafter, also referred to as a "circumferential wiring pattern 6225 of the negative electrode"). The circumferential wiring pattern 6225 of the negative electrode extends in the circumferential direction over an angular range of about 180 degrees different from that of the circumferential wiring pattern 6215 of the positive electrode in the entire circumference of the power receiving circuit board 91. In this manner, in the present embodiment, the circumferential wiring pattern 6215 of the positive electrode and the circumferential wiring pattern 6225 of the negative electrode extend in the circumferential direction on an outer peripheral portion of the surface A of the power receiving circuit board 91 over an angle range of slightly less than 180 degrees in a diagonal relationship with each other. In this case, the negative electrode side circuit 6522 includes diodes D2 and D4, which are the rectifying elements, on the radially inner side of the circumferential wiring pattern 6225 of the negative electrode.

The circumferential wiring pattern 6225 of the negative electrode preferably extends in the circumferential direction over the angular range of about 180 degrees with a constant radial width.

The surface B of the power receiving circuit board 91 has a ground pattern 919 of a ground potential extending in the circumferential direction. The ground pattern 919 may be electrically connected to a member having a ground potential (for example, a support member 92 in FIG. 7) via the positioning pins Pn. The ground pattern 919 extends over the entire circumference in the circumferential direction. The ground pattern 919 overlaps the circumferential wiring pattern 6215 of the positive electrode and the circumferential wiring pattern 6225 of the negative electrode described above when viewed in the axial direction. In this case, the ground pattern 919 may overlap so as to include the circumferential wiring pattern 6215 of the positive electrode and the circumferential wiring pattern 6225 of the negative electrode described above when viewed in the axial direction. A technical significance of the ground pattern 919 will be described later.

On the surface B of the power receiving circuit board 91, a wiring portion 6528 to the secondary coil 742 of the transformer Tr is formed radially inward of the ground pattern 919. Note that the wiring portion 6528 connects a midpoint between the diodes D1 and D2 and one end of the secondary coil 742, and connects a midpoint between the diodes D3 and D4 and the other end of the secondary coil 742.

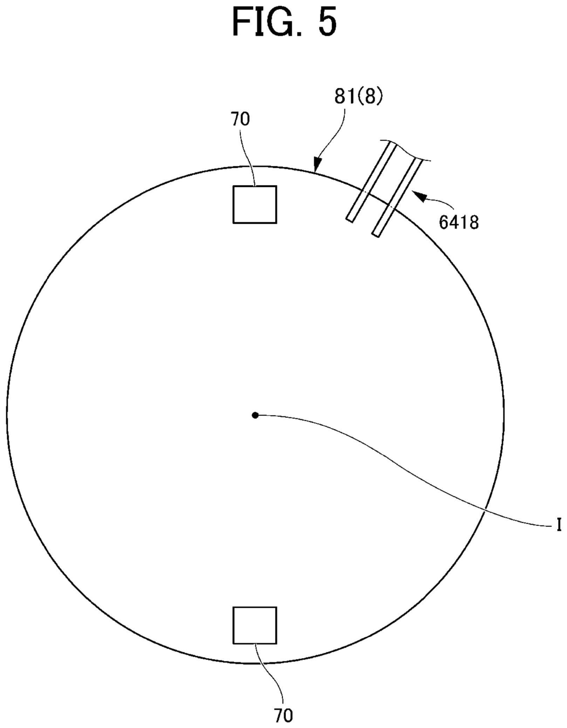

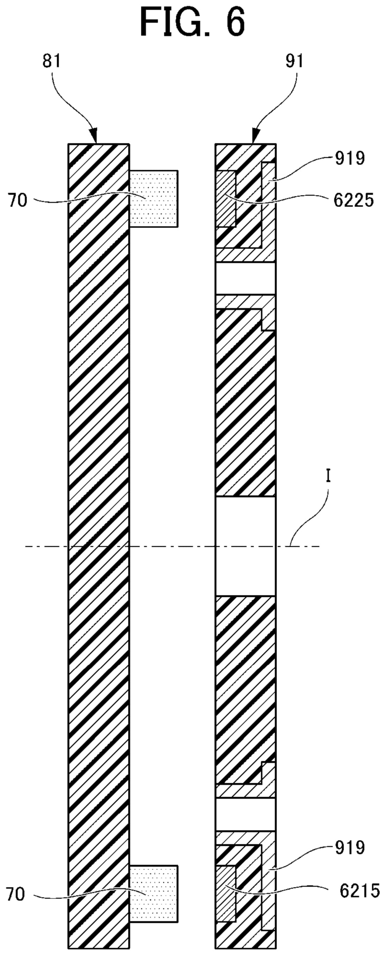

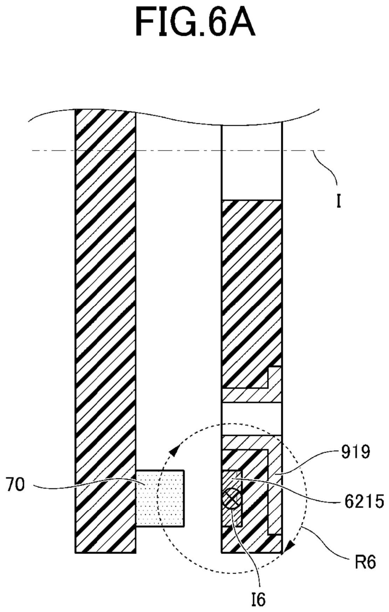

FIG. 5 is a plan view schematically illustrating a configuration of a power feeding circuit board 81. FIG. 6 is a schematic diagram illustrating a relationship between the power feeding circuit board 81 and the power receiving circuit board 91 in a schematic cross-sectional view passing through the central axis I. FIG. 6A is a diagram illustrating a detection principle of a contactless current sensor 70 and is a cross-sectional view of a part in FIG. 6.

The power feeding circuit board 81 is fixed to a case 4 (see FIG. 7). The case 4 may be a part of a motor case that accommodates the rotary electric machine 3.

The power feeding circuit unit 64 described above is mounted on the power feeding circuit board 81. Note that in FIG. 5, the power feeding circuit unit 64 is not illustrated. The power feeding circuit unit 64 may be formed on a surface opposite to a side illustrated in FIG. 5. Further, in FIG. 5, a part of a wiring portion 6418 from the power feeding circuit unit 64 to the primary coil 741 is schematically illustrated.

The power feeding circuit board 81 has a circular shape around the central axis I when viewed in the axial direction. Alternatively, the power feeding circuit board 81 may have an annular shape having a center hole centered on the central axis I. In this case, the rotary shaft 314 (see FIG. 7) of the rotor 310 may be inserted into the center hole of the power feeding circuit board 81 while being separated in the radial direction. As illustrated in FIG. 6, the power feeding circuit board 81 is disposed to face the surface A of the power receiving circuit board 91 in the axial direction.

The contactless current sensor 70 is provided on a surface of the power feeding circuit board 81 on a side facing the power receiving circuit board 91. The contactless current sensor 70 is provided at a radial position that can face the circumferential wiring pattern 6215 of the positive electrode and the circumferential wiring pattern 6225 of the negative electrode in the axial direction. When a current flows through the circumferential wiring pattern 6215 of the positive electrode, the current flows in a direction perpendicular to a paper surface corresponding to a tangential direction of the circumferential wiring pattern 6215 of the positive electrode in the cross-sectional view illustrated in FIG. 6A. For example, as illustrated in FIG. 6A, when the current flows in a direction from a front side to a back side of the paper surface (the direction is indicated by I6 in FIG. 6A), a clockwise magnetic field (indicated by R6 in FIG. 6A) is generated around the circumferential wiring pattern 6215 of the positive electrode in the cross-sectional view. An intensity of the magnetic field correlates with a magnitude of the current (Ampere's law). In this case, the contactless current sensor 70 includes a Hall element therein, and generates an electric signal corresponding to the intensity of the magnetic field (that is, an electric signal corresponding to the magnitude of the current). The contactless current sensor 70 may be provided at two or more locations along the circumferential direction. One contactless current sensor 70 faces the circumferential wiring pattern 6215 of the positive electrode or the circumferential wiring pattern 6225 of the negative electrode in the axial direction according to a rotation phase of the rotor 310 as the rotary electric machine 3 rotates. In a mechanical angle range in which one contactless current sensor 70 faces the circumferential wiring pattern 6215 of the positive electrode in the axial direction, a state illustrated in FIG. 6A is formed, and the one contactless current sensor 70 generates the electric signal corresponding to the magnitude of the current flowing through the circumferential wiring pattern 6215 of the positive electrode. Similarly, in a mechanical angle range in which one contactless current sensor 70 faces the circumferential wiring pattern 6225 of the negative electrode in the axial direction, the one contactless current sensor 70 generates the electric signal corresponding to the magnitude of the current flowing through the circumferential wiring pattern 6225 of the negative electrode. In this manner, according to the present embodiment, the magnitude of the current flowing through the rotor coil 316 (a current value on the secondary side) can be detected while using a contactless power feeding method. At this time, in the present embodiment, the contactless current sensor 70 facing the circumferential wiring pattern 6215 of the positive electrode and the circumferential wiring pattern 6225 of the negative electrode in the axial direction can be disposed using two boards (the power feeding circuit board 81 and the power receiving circuit board 91) disposed adjacent to each other in the axial direction. Accordingly, the contactless current sensor 70 can be disposed without increasing a size of the two boards (the power feeding circuit board 81 and the power receiving circuit board 91) in the radial direction. In this manner, according to the present embodiment, the current sensor 70 that detects the current value on the secondary side can be disposed without increasing a size of the entire vehicle drive device 1A in the radial direction while using the contactless power feeding method.

In the present embodiment, the mechanical angle range in which one contactless current sensor 70 faces the circumferential wiring pattern 6215 of the positive electrode in the axial direction corresponds to an angle of a circumferential range of the circumferential wiring pattern 6215 of the positive electrode, and is approximately 180 degrees as described above. In addition, the mechanical angle range in which one contactless current sensor 70 faces the circumferential wiring pattern 6225 of the negative electrode in the axial direction corresponds to an angle of a circumferential range of the circumferential wiring pattern 6225 of the negative electrode, and is approximately 180 degrees as described above. In this case, the one contactless current sensor 70 can obtain the electric signal corresponding to the magnitude of the current flowing through the rotor coil 316 at substantially any timing.

In the present embodiment, the contactless current sensors 70 are provided at two locations at intervals of 180 degrees along the circumferential direction. However, in a modification, the contactless current sensors 70 may be provided at three or more locations along the circumferential direction, or may be provided at only one location.

Next, a preferred example of an arrangement of each component for forming the power feeding device 8 in the axial direction will be described with reference to FIG. 7 and subsequent drawings.

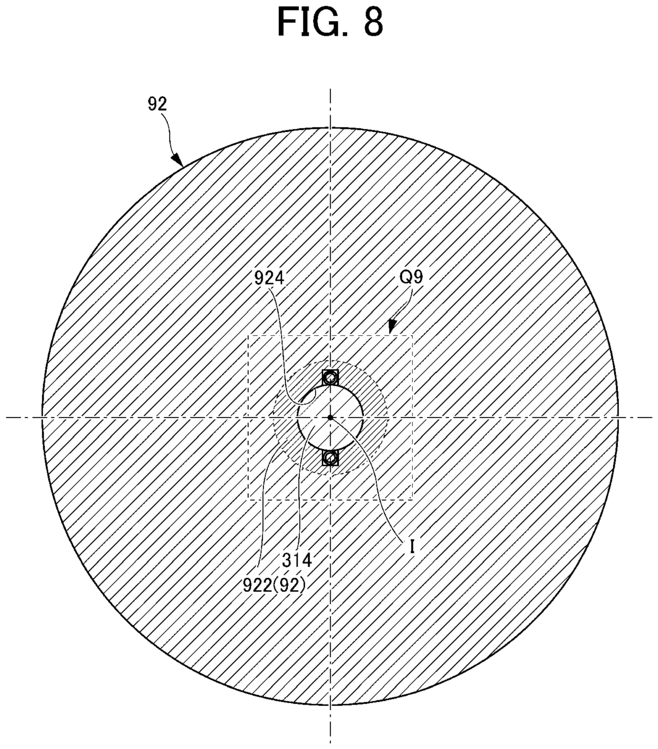

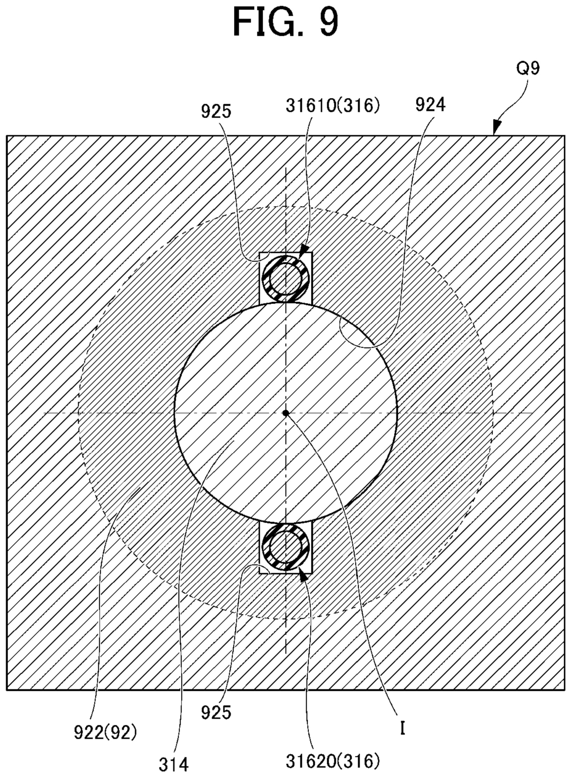

FIG. 7 is a diagram illustrating the arrangement of the components for forming the power feeding device 8 in the axial direction in the schematic cross-sectional view passing through the central axis I. FIG. 7 illustrates the stator 320, the rotor 310, and the rotary shaft 314 together with the power feeding device 8. Further, in FIG. 7, the wiring portion 6418 from the power feeding circuit board 81 to the primary coil 741 and a wiring portion 6518 from the power receiving circuit board 91 to the secondary coil 742 are schematically indicated by dotted lines. FIG. 8 is a schematic cross-sectional taken along a plane perpendicular to the axial direction at a position in the axial direction along a line VIII-VIII in FIG. 7. FIG. 9 is an enlarged view illustrating a portion Q9 in FIG. 8.

In FIG. 7, an X direction, an X1 side which is one side in the X direction, and an X2 side which is the other side in the X direction are defined parallel to the axial direction.

In the present embodiment, as illustrated in FIG. 7, the power feeding circuit board 81, the power receiving circuit board 91, the transformer Tr, and the rotor 310 are disposed in this order in the axial direction. In this case, as described above, the surface A of the power receiving circuit board 91 and the power feeding circuit board 81 can directly face each other in the axial direction. Accordingly, the power receiving circuit board 91 and the power feeding circuit board 81 can be brought close to each other in the axial direction, and detection accuracy of the contactless current sensor 70 can be improved.

In addition, the transformer Tr and the stator coil 322 (see FIG. 2), which may be noise sources that reduce the detection accuracy of the current sensor 70, can be disposed on the X2 side of the power receiving circuit board 91. Accordingly, the detection accuracy of the contactless current sensor 70 can be improved. Further, in the present embodiment, as described above, the ground pattern 919 is provided on the surface B (surface on the X2 side) of the power receiving circuit board 91. Accordingly, a shield effect of the ground pattern 919 between the noise source and the current sensor 70 (or the circumferential wiring patterns 6215 and 6225) can further improve noise resistance (accordingly, reliability of sensor information from the current sensor 70).

In the present embodiment, the power receiving circuit board 91 is supported by the support member 92 on the X2 side. The support member 92 may be formed of, for example, a metal material. Also in this case, the noise resistance can be further improved by the shield effect of the support member 92.

The support member 92 has a center hole 924 into which the rotary shaft 314 is fitted. The support member 92 is coupled to the rotary shaft 314 so as to be rotatable integrally with the rotary shaft 314. For example, the support member 92 may be coupled to the rotary shaft 314 via key fitting with the rotary shaft 314 by a key groove or fitting by press-fitting.

The support member 92 includes an annular board support portion 921 and a sleeve 922, and the center hole 924 is formed so as to penetrate the board support portion 921 and the sleeve 922. The board support portion 921 supports the power receiving circuit board 91 so as to be in contact with the surface B of the power receiving circuit board 91 in the axial direction.

As described above, the sleeve 922 fits the rotary shaft 314 on the radially inner side and fits a secondary core 74-2 of the transformer Tr on the radially outer side. The sleeve 922 and the secondary core 74-2 may be integrally coupled to each other via key fitting by a key groove or fitting by press-fitting, similarly to the coupling manner between the support member 92 and the rotary shaft 314. In this case, as illustrated in FIG. 7, the primary coil 741 of the transformer Tr may be wound radially outward of the secondary coil 742. Note that a primary core 74-1 of the transformer Tr is fixed to the case 4.

In the present embodiment, as illustrated in FIGS. 8 and 9, the electrical connection between the rotor coil 316 and the power receiving circuit unit 65 is implemented via a gap between the support member 92 and the rotary shaft 314. In the example illustrated in FIG. 9, such a gap is formed by a recess 925 in an inner peripheral surface of the support member 92 (an inner peripheral surface of the sleeve 922). The recess 925 is formed in the inner peripheral surface of the support member 92 so as to be recessed radially inward. As illustrated in FIG. 9, two recesses 925 may be provided on a positive electrode side and a negative electrode side. In this case, a positive electrode lead wire 31610 and a negative electrode lead wire 31620 from the rotor coil 316 can extend in the axial direction through the corresponding recesses 925, respectively.

According to such a configuration, even when the transformer Tr is disposed between the rotor 310 and the power receiving circuit board 91 in the axial direction, the electrical connection between the rotor coil 316 of the rotor 310 and the power receiving circuit unit 65 (not illustrated in FIG. 7) of the power receiving circuit board 91 can be implemented in a manner of straddling the transformer Tr. In other words, even when the transformer Tr, which is the noise source, is disposed between the rotor 310 and the power receiving circuit board 91 in the axial direction in order to increase the detection accuracy of the contactless current sensor 70, the electrical connection between the rotor coil 316 of the rotor 310 and the power receiving circuit unit 65 of the power receiving circuit board 91 can be appropriately established.

Although the embodiment has been described in detail above, this disclosure is not limited to specific embodiments, and various modifications and changes can be made within the scope of the claims. In addition, it is also possible to combine all or a plurality of components according to the embodiment described above.

For example, in the embodiment described above, the power receiving circuit board 91 is a single-layer board, but may be a multi-layer board. In this case, the ground pattern 919 may be formed in an inner layer, or may be formed over two or more layers.

Further, in the embodiment described above, the support member 92 has the annular shape around the central axis I when viewed in the axial direction. That is, the support member 92 has the annular shape having the center hole 924 centered on the central axis I. However, in a modification, the support member 92 may have a circular shape centered on the central axis I (that is, a shape without a center hole). In this case, the support member 92 may be fixed to the rotor 310 via an end cover of the rotor 310 (a member that covers the rotor coil 316 from the axially outer side) or the like, or may be formed integrally with the end cover. Note that in such a modification, the power receiving circuit board 91 may also have a circular shape centered on the central axis I (that is, a shape without a center hole).

### Reference Signs List

1A: vehicle drive device
3: rotary electric machine
320: stator
310: rotor (winding field rotor)
314: rotary shaft
316: rotor coil (coil)
8: power feeding device
81: power feeding circuit board (second board)
91: power receiving circuit board (first board)
92: support member
Tr: transformer
D1 to D4: diode (rectifying element)
919: ground pattern (pattern of ground potential)
6215, 6225: circumferential wiring pattern (wiring pattern)

## Claims

1. A vehicle drive device comprising:
a stator;
a winding field rotor around which a coil is wound;
a power feeding device provided between a power supply and the winding field rotor and configured to supply power to the winding field rotor in a contactless manner; and
a contactless current sensor, wherein
the power feeding device includes
a first board on a fixed side which has a power feeding circuit unit electrically connected to the power supply, and
a second board which has a power receiving circuit unit electrically connected to the coil, is disposed so as to face the first board, and is configured to rotate integrally with the winding field rotor, and
the contactless current sensor is disposed on the first board.

2. The vehicle drive device according to claim 1, wherein
the second board faces the first board in an axial direction,
the power receiving circuit unit is mounted on a surface of the second board on a side facing the first board in the axial direction,
the contactless current sensor is mounted on a surface of the first board on a side facing the second board in the axial direction, and
the contactless current sensor and the power receiving circuit unit are disposed at a same radial position.

3. The vehicle drive device according to claim 2, wherein
the second board has an annular shape or a circular shape around an axis of the winding field rotor, and
the power receiving circuit unit includes a rectifying element and a wiring pattern extending in a circumferential direction, the wiring pattern being located radially outward of the rectifying element at a radial position overlapping the contactless current sensor when viewed in the axial direction.

4. The vehicle drive device according to claim 3, wherein
a ground potential pattern extending in the circumferential direction is formed on the surface or an inner layer of the second board on a side not facing the first board in the axial direction, and
the ground potential pattern and the wiring pattern overlap when viewed in the axial direction.

5. The vehicle drive device according to any one of claims 1 to 4, wherein
the power feeding device further includes a transformer,
the second board has an annular shape when viewed in the axial direction, and is supported by a support member having an annular shape when viewed in the axial direction,
a rotary shaft of the winding field rotor penetrates the second board and the support member in the axial direction,
the first board, the second board, the transformer, and the winding field rotor are disposed in this order in the axial direction, and
electrical connection between the coil of the winding field rotor and the power receiving circuit unit of the second board is implemented via a gap between the support member and the rotary shaft.
